Europäisches Patentamt

European Patent Office

Office européen des brevets

(11) Numéro de publication: **0 136 231 B1**

(12) **FASCICULE DE BREVET EUROPEEN**

(51) Int. Cl.⁴: **A 01 N 47/44** // (A01N47/44, 43:54)

(45) Date de publication du fascicule du brevet:
**20.04.88**

(21) Numéro de dépôt: **84401841.6**

(22) Date de dépôt: **18.09.84**

---

(54) Composition à pouvoir bactéricide élevé contenant un biguanide et une pyrimidine.

---

(30) Priorité: **22.09.83 FR 8315100**

(43) Date de publication de la demande:
**03.04.85 Bulletin 85/14**

(45) Mention de la délivrance du brevet:
**20.04.88 Bulletin 88/16**

(84) Etats contractants désignés:
**AT BE CH DE FR GB IT LI LU NL SE**

(56) Documents cités:
**EP - A - 0 041 448
FR - M - 7 121**

**MERCK INDEX, édition 9, 1976, pages 265,616, Merck & Co., Inc., Rahway, US**

(73) Titulaire: **Salkin, André, 134 avenue du 14 juillet, F-76300 Sotteville les Rouen (FR)**

(72) Inventeur: **Saikin, André, 134 avenue du 14 juillet, F-76300 Sotteville les Rouen (FR)**

(74) Mandataire: **Combe, André, CABINET BEAU DE LOMENIE 55, rue d'Amsterdam, F-75008 Paris (FR)**

---

ACTORUM AG

## Description

La présente invention concerne de nouvelles compositions présentant un pouvoir bactéricide élevé.

De nombreux produits à pouvoir bactéricide sont connus. Chacun de ces produits présente un certain spectre d'activitè vis-à-vis des diverses espèces contre lesquelles il peut être utilisé. Mais il peut y avoir intérêt à disposer de produits qui possèdent, d'une part, un spectre d'activité aussi complet que possible et, d'autre part, vis-à-vis de certaines espèces, un pouvoir bactéricide plus prononcé. Ceci peut être obtenu par la réalisation de mélanges de plusieurs bactéricides, encore faut-il que les bactéricides connus, utilisés dans ces mélanges, soient compatibles entre eux, complémentaires et provoquent les effets de synergie souhaités. C'est là l'objet de la présente invention.

L'invention concerne donc les compositions à pouvoir bactéricide élevé obtenues par mélange de deux produits bactéricides connus dont l'action présente une synergie, lesdites compositions étant caractérisées en ce qu'elles contiennent de 0,01 à 1% d'au moins un dérivé de biguanide choisi parmi l'hexaméthylène-bis-5(p-chlorophényl)-biguanide (chlorhexidine) et le chlorhydrate de polyhexaméthylènebiguanide (PHMB) et de 25 ppm à 0,2% de 1,3-bis- (/β-éthylhexyl)-5-methyl-5-amino-hexahydropyrimidine (hexétidine).

La présente invention concerne également les compositions mères, contenant les mêmes ingrédients dans les mêmes proportions relatives que celles mentionnées ci-dessus, lesdites solutions mères étant caractérisées en ce qu'elles donnent naissance aux compositions décrites ci-dessus par dilution avec de l'eau, de l'alcool ou des mélanges eau-alcool ou tout autre solvant acceptable.

L'invention concerne donc les compositions à pouvoir bactéricide élevé comportant des produits bactéricides connus qui sont, d'une part, au moins un dérivé de biguanide choisi parmi l'hexaméthylène-bis-5-(p-chlorophényl)-biguanide (chlorhexidine) et le chlorhydrate de polyhexaméthylène-biguanide (PHMB), et, d'autre part, le 1,3-bis-(β-éthylhexyl)5-methyl-5-aminohexahydropyrimidine (hexétidine).

Les biguanides choisis sont connus pour leur pouvoir germicide vis-à-vis de germes gram + et gram -, pour leur absence de toxicité et des phénomènes d'irritation lors des contacts avec la peau et les muqueuses. Les deux ont toutefois quelques lacunes, notamment un faible pouvoir antifongique et une certaine instabilité à la lumière et aux variations de pH et à la présence de produits tensioactifs. Le PHMB est le plus stable, mais son action fongicide est également très faible.

On a essayé de suppléer au manque de pouvoir fongicide de ces biguanides en réalisant des compositions contant, outre lesdits biguanides, un composé d'ammonium quaternaire. Dans certains cas, des résultats intéressants ont été atteints, mais il faut tenir compte de la toxicité élevée des composés d'ammonium quaternaire, qui sont tous sensibilisants et irritants et, de plus, très sensibles à la présence de protéines telles que le sang, le plus, le lait.

Le deuxième composé (hexétidine) est utilisé comme antiseptique désinfectant cicatrisant pour la bouche et toutes les cavités naturelles chez l'homme.

D'après le dictionnaire pharmaceutique Vidal : «l'hexétidine est dépourvue de toxicité – en effet les doses massives n'ont pas permis de déterminer une DL 50 en expérimentation animale».

Le pouvoir antibactérien d'hexétidine est dû à l'interférence avec le processus métabolique vital nécessaire à la croissance de micro-organismes pathogènes.

Les propriétés antimicrobiennes et antifongiques sont accentuées par l'affinité particulière de l'hexétidine aux protéines de la peau et des muqueuses – facteur très important de son efficacité désinfectante car elle ne disparaît que très lentement des surfaces ayant été traitées.

L'hexétidine est connue comme étant plus active vis-à-vis des bactéries gram + (où elle est efficace à de très faibles doses), y compris le BK (tuberculose), que contre les gram – où de plus fortes concentrations sont nécessaires.

Dans les compositions selon l'invention, on utilise de 0,01 à 1 partie en poids d'au moins un biguanide pour 0,0025 à 0,15 partie en poids d'hexétidine.

Les mélanges selon l'invention présentent certains effets de synergie; ainsi, ces mélanges permettent de combattre efficacement certaines bactéries gram – telles que le Pseudomonas aeruginosa, grand responsable de la surinfection hospitalière. En pratique, on peut montrer que lesdits mélanges (notamment les solutions qui contiennent environ 0,5% de chlorhexidine et environ 0,1% d'hexétidine) permettent de tuer en moins d'une minute la plupart des colonies de bactéries gram + et gram -, les levures et les champignons.

Mais, de plus, on notera l'effet de remanence très important obtenu grâce aux mélanges selon l'invention. Cet effet est vraisemblablement dû à la présence et au mode d'action de l'hexétidine dans le mélange. Lorsque la peau, une plaie, une brûlure sont laissées à l'air et sont rincées, la concentration locale des dérivés de biguanide pourra être fortement réduite et pourtant il semble que, grâce à la présence d'hexétidine, le dérivé biguanide restant continuera à avoir une action bactériostatique prononcée.

Les compositions selon l'invention peuvent être utilisées sous diverses formes comme par exemple des solutions, des émulsions, des gels, des pommades. La forme préférée est la solution dans un solvant compatible, cette compatibilité devant s'apprécier d'une part vis-à-vis des produits actifs eux-mêmes (biguanide et hexétidine) et d'autre part vis-à-vis de l'utilisation envisagée (inocuité vis-à-vis de la peau par exemple.

Les compositions selon l'invention peuvent être utilisées dans tous les cas où l'on souhaite disposer d'un produit à haut pouvoir bactéricide et fongicide. Parmi les applications envisagées, on peut citer:

- la désinfection des mains du personnel hospitalier;
- la désinfection d'objets courants tels que biberons, dentiers, brosses
- la désinfection du matériel et des peaux dans le domaine vétérinaire;
- l'hygiène, les soins et le traitement des peaux acnéiques.

Dans le lavage des mains des chirurgiens avant la mise des gants et l'aspersion des mains des infirmières par une solution hydroalcoolique séchant vite, le phénomène de rémanence apparaîtra et protégera aussi bien le malade que le personnel hospitalier pendant plusieurs heures.

Le phénomène synergétique permet d'utiliser les concentrations moindres que celle prévue pour les produits appliqués séparément. Ceci peut être très important dans certains cas. Cependant, dans tous les cas, les mélanges selon l'invention permettront d'obtenir une plus grande sécurité.

Lorsque les mélanges selon l'invention se présentent sous forme de solutions, le solvant utilisé peut être soit de l'eau, soit de l'alcool, soit des mélanges d'eau et d'alcool; mais, on peut également utiliser les autres solvants admissibles.

On notera, de plus, que, si, lors de l'emploi, les solutions selon l'invention de devront contenir que des proportions assez faibles de produits actifs, il est tout à fait possible et même souvent souhaitable de mettre dans le commerce des solutions mères beaucoup plus concentrées en produits actifs.

Les exemples suivants illustrent l'invention.

On mentionne tout d'abord ci-après, aux fins de comparaison ultérieure, les résultats obtenus avec les divers éléments de la combinaison lorsque ceux-ci sont employés isolément et certaines combinaisons selon l'invention.

Pour ces résultats:
- la colonne A représente la concentration (en ppm) minimale inhibitrice de croissance pour l'espèce considérée, les résultats sont fournis en ppm de principe actif;
- la colonne B représente la quantité (en ppm) de principe actif nécessaire pour la destruction complète (100%) de l'espèce.

Les résultats suivants ont été obtenus:

| Produit testé | A | B |
|---|---|---|
| Staphylococcus aureus | | |
|   PHMB | | |
|     Solution à 20% | 20 | 1000 |
|   Chlorhexidine | | |
|     Solution à 20% | 5–10 | 600 |
|   Hexitidine | 10 | 200 |

| Produit testé | A | B |
|---|---|---|
|   Mélange selon l'invention | | |
|     0,5% de biguanide ⎫ | | |
|     0,2% d'hexétidine ⎭ | 0,5 | 40 |
| Candida albicans | | |
|   PHMB | | |
|     Solution à 20% | 250 | 2500 |
|   Chlorhexidine | | |
|     Solution à 20% | 35–75 | – |
|   Hexétidine | 60 | 75 |
|   Mélange selon l'invention | | |
|     0,5% de biguanide ⎫ | | |
|     0,2% d'hexétidine ⎭ | 10–15 | 75 |
| Escherichia coli | | |
|   PHMB | | |
|     Solution à 20% | 20 | 500 |
|   Chlorhexidine | | |
|     Solution à 20% | 5–25 | > 800 |
|   Hexétidine | 100 | >1000 |
|   Mélange selon l'invention | | |
|     0,5% de biguanide ⎫ | | |
|     0,2% d'hexétidine ⎭ | 3–5 | 62,5 |
| Pseudomonas aeruginosa | | |
|   PHMB | | |
|     Solution à 20% | 100 | 2500 |
|   Chlorhexidine | | |
|     Solution à 20% | 15–300 | 2500 |
|   Hexétidine | 100–300 | 1000 |
|   Mélange selon l'invention | | |
|     0,5% de biguanide ⎫ | | |
|     0,2% d'hexétidine ⎭ | 10 | 75–125 |

On a réalisé pour diverses utilisations les mélanges décrits ci-après.

Exemples 1 à 4
1) Solutions de désinfection à activité générale

| | A | B |
|---|---|---|
| PHMB 100% | 0,05 à 0,5% | |
| Chlorhexidine 100% | | 0,05 à 0,5% |
| Hexétidine | 0,05 – 0,15% | 0,05 – 0,15% |
| Séquestrant organique | 0,05 à 1% | 0,05 – 1% |
| Agent mouillant | 0,05 à 0,15% | 0,05 à 0,15% |
| Alcool iso/eau 60% | qsp | qsp |

2) Solutions pour la désinfection des mains des chirurgiens

| | A | B |
|---|---|---|
| PHMB | 0,25 – 1% | |
| Chlorhexidine | – | 0,25 – 1% |
| Hexétidine | 0,1 – 0,15% | 0,1 – 0,15% |
| Séquestrant organique | 0,5 – 1% | 0,5 – 1% |
| Bétaine 30% | 20 – 25% | 20 – 25% |
| Alcool gras éthoxylé (ou alcool octylcrésyléthoxylé) | 4 – 5% | 4 – 5% |
| Alcool iso/eau 60% | qsp | qsp |

3) Solutions utilisable pour la désinfection des instruments

Dérivés de biguanide      1%
Hexétidine                0,25%
Tensioactif               0,1%
Séquestrant organique     0,5 à 1,5%
pH                        6 à 7
Alcool iso/eau 60%        qsp

4) Autre solutions utilisable pour les instruments

Dérivés de biguanide      1 à 1,5%
Hexétidine                0,15 à 0,3%
Glutaraldéhyde (50%)      1 à 2%
Séquestrant DETP          0,75%
Alcool iso/eau 60%        qsp
pH                        6

Exemple 5

On donne ci-après un exemple d'une solution concentrée contenant les produits actifs et pouvent donner naissance aux solutions selon l'invention :

PHMB ou chlorhexidine (à 20%)           20%
Hexétidine                              4%
Alcool gras éthoxylé                    · 5%
Alcool iso (ou éthanol)                 24%
Séquestrant organique (solution à 40%)  10%
Tampon pH 6,5
Alcool iso/eau 60%                      qsp

Une telle solution peut avantageusement être diluée 20 à fois.

## Revendications

1. Compositions à action désinfectante caractérisées en ce qu'elles contiennent:
– de 0,01 à 1% d'au moins un dérivé de biguanide choisi parmi l'hexaméthylène-bis-5-(p-chloro-phényl)-biguanide (chlorhexidine) et le chlorhydrate de polyhexaméthylènebiguanide (PHMB) et de 25 ppm à 0,2% de 1,3-bis- (β-éthylhexyl)-5 méthyl-5-amino-hexahydropyrimidine (hexétidine).

2. Compositions mères contenant les mêmes ingrédients actifs que les compositions selon la revendication 1, caractérisée en ce qu'elles donnent naissance auxdites compositions par dilution avec de l'eau, de l'alcool ou un mélange eau-alcool, ou tout autre solvant acceptable.

## Patentansprüche

1. Zusammensetzungen mit desinfizierender Wirkung, dadurch gekennzeichnet, dass sie enthalten:
– von 0,01 bis 1% mindestens eines Biguanidderivats, ausgewählt aus Hexamethylen-bis-5-(p-chlorphenyl)-biguanid (Chlorhexidin) und Polyhexamethylenbiguanid-hydrochlorid (PHMB), und von 25 ppm bis 0,2% 1,3-bis-(β-Ethylhexyl)-5-methyl-5-amino-hexahydropyrimidin (Hexetidin).

2. Mutterzusammensetzungen, enthaltend dieselben aktiven Ingredienzien wie die Zusammensetzungen nach Anspruch 1, dadurch gekennzeichnet, dass sie durch Verdünnung mit Wasser, Alkohol oder einer Wasser-Alkohol-Mischung oder jedem anderen akzeptablen Lösungsmittel besagte Zusammensetzungen liefern.

## Claims

1. Compositions having a disinfectant action, characterized in that they contain :
– from 0.01 to 1% by weight of at least one biguanide derivative selected from hexamethylene-bis-5-(p-chlorophenyl)-biguanide (chlorhexidine) and the hydrochloride of polyhexamethylenebiguanide (PHMB), and from 25 ppm to 0.2% of 1,3-bis-(β-ethylhexyl)-5-methyl-5-amino-hexa-hydropyrimidine (hexetidine).

2. Mother compositions containing the same active ingredients as the compositions of Claim 1, characterized in that they produce said compositions by dilution with water, alcohol or a water-alcohol mixture, or any other acceptable solvent.